# EUROPÄISCHE PATENTSCHRIFT

(11) **EP 3 288 702 B1**
(45) Veröffentlichungstag und Bekanntmachung des Hinweises auf die Patenterteilung: **04.08.2021**
(21) Anmeldenummer: 15784288.1
(22) Anmeldetag: 05.10.2015
(51) Int. Cl.: B23B 31/08

(54) **GEWINDESCHNEIDFUTTER ZUM SYNCHRON-GEWINDESCHNEIDEN**
TAP-HOLDING CHUCK FOR SYNCHRONIZED THREAD CUTTING
MANDRIN PORTE-TARAUD POUR FILETAGE SYNCHRONISÉE

(30) Priorität: 28.04.2015 DE 202015102119 U
(43) Veröffentlichungstag der Anmeldung: 07.03.2018
(73) Patentinhaber: Bilz Werkzeugfabrik GmbH & Co. KG, 73760 Ostfildern (DE)
(72) Erfinder: BABEL, Gerhard, 73666 Baltmannsweiler (DE)
(74) Vertreter: Witte, Weller & Partner Patentanwälte mbB
(86) Internationale Anmeldenummer: PCT/EP2015/072917
(87) Internationale Veröffentlichungsnummer: WO 2016/173681

(56) Entgegenhaltungen:
- EP-A1- 2 428 298
- EP-A1- 2 727 676
- US-A- 4 547 105

## Beschreibung

Gewindeschneidfutter zum Synchron-Gewindeschneiden mit einem Aufnahmeteil zum maschinenseitigen Antrieb, und mit einem Spannmittel für einen Gewindebohrer, zwischen denen ein Zwischenteil angeordnet ist, wobei das Zwischenteil mit dem Aufnahmeteil über mindestens ein Elastomerelement in Axialrichtung nachgiebig verbunden ist.

Ein derartiges Gewindeschneidfutter zum Synchron-Gewindeschneiden ist aus der EP 0 887 135 A1 bekannt.

Beim Synchron-Gewindeschneiden wird eine genaue Synchronisierung der Maschinenspindeldrehbewegung zum axialen Vorschub als Funktion der Gewindesteigung des eingesetzten Gewindebohrers angestrebt. Bei diesem sog. "Rigid Tapping" hat es sich in der Praxis gezeigt, dass eine genaue Synchronisierung des Vorschubs der Maschinenspindel mit dem vom Gewindeschneidbohrer vorgegebenen Vorschub nur bedingt möglich ist.

Um ein Auftreten von hohen Axialkräften in Zug- oder Druckrichtung insbesondere beim Reversieren, d.h. also beim Umkehren der Drehbewegung am Ende des Gewindeschneidprozesses zum Herausdrehen des Gewindebohrers, zu vermeiden, ist gemäß der EP 0 887 135 A1 das Zwischenteil in axialer Richtung in Zug- und Druckrichtung mit einem geringen, über Elastomerverbindungen abgefederten, axialen Spiel ausgebildet. Dabei ist das Zwischenteil in Drehrichtung spielfrei am Aufnahmeteil bzw. am Futterschaft gehalten.

Es hat sich gezeigt, dass eine derartige Anordnung zwar grundsätzlich eine Verbesserung beim Synchron-Gewindeschneiden ergibt, dass die Qualität des Gewindeschneidvorgangs jedoch nach wie vor zu wünschen übriglässt. Außerdem ist der Aufbau der vorbekannten Anordnung relativ aufwändig und kann ausschließlich für ein Synchron-Gewindeschneidfutter verwendet werden.

Aus der EP 2 727 676 A1 ist ein Gewindeschneidfutter gemäß dem Oberbegriff von Anspruch 1 bekannt.

Vor diesem Hintergrund liegt der Erfindung die Aufgabe zugrunde, ein Gewindeschneidfutter zum Synchron-Gewindeschneiden anzugeben, das ein Synchron-Gewindeschneiden mit hoher Qualität ermöglicht und vorzugsweise möglichst vielseitig anwendbar ist. Dabei soll eine möglichst gute Synchronisierung zwischen dem axialen Vorschub und der Drehung des Gewindeschneiders ermöglicht werden.

Diese Aufgabe wird bei einem Gewindeschneidfutter gemäß der eingangs genannten Art erfindungsgemäß dadurch gelöst, dass mindestens eine erste Kugel zur Drehmomentübertragung zwischen dem Aufnahmeteil und dem Zwischenteil mit einem Spiel in Drehrichtung und in Axialrichtung aufgenommen ist, und dass mindestens eine zweite Kugel in Radialrichtung beweglich im Aufnahmeteil aufgenommen ist, die über das Elastomerelement derart mit dem Spannmittel gekoppelt ist, dass sich eine über das Elastomerelement abgefederte Nachgiebigkeit in Axialrichtung und in Drehrichtung ergibt.

Die Aufgabe der Erfindung wird auf diese Weise vollkommen gelöst.

Da sich sowohl eine Nachgiebigkeit in Axialrichtung als auch in Drehrichtung ergibt, ist eine Anpassung an den vom Gewindeschneidbohrer vorgegebenen Vorschub in jedem Fall beim Synchron-Gewindeschneiden gewährleistet, insbesondere auch beim Reversieren. Dadurch, dass die Elastizität in Axialrichtung und in Drehrichtung und auch die Drehmomentübertragung jeweils über Kugeln erreicht wird, ergibt sich ein deutlich vereinfachter Aufbau und außerdem eine vielfältige Einsatzmöglichkeit, da die so gebildete Einheit zum Synchron-Gewindeschneiden sowohl unmittelbar in Verbindung mit einem Gewindeschneidfutter verwendet werden kann als auch mit einem anders gearteten Spannfutter gekoppelt werden kann.

Es versteht sich, dass das Spannmittel als separates Teil ausgebildet sein kann, das mit dem Zwischenteil verbunden ist. Jedoch kann das Spannmittel auch am Zwischenteil selbst ausgebildet sein.

In vorteilhafter Weiterbildung der Erfindung ist die mindestens eine zweite Kugel gegenüber dem Elastomerelement in Radialrichtung vorgespannt.

Vorzugsweise ist das Spiel der mindestens einen ersten Kugel derart bemessen, dass sich beim Gewindeschneiden und beim Reversieren zunächst eine über das Elastomerelement abgefederte Drehmomentübertragung ergibt, bevor eine Mitnahme über die erste Kugel erfolgt.

Durch diese Maßnahmen ist sichergestellt, dass beim Gewindeschneiden und beim Reversieren in jedem Falle zunächst eine elastisch abgefederte Mitnahme über das Elastomerelement erfolgt, bevor eine starre Mitnahme über die mindestens eine erste Kugel erfolgt. Auf diese Weise wird eine hohe Qualität der geschnittenen Gewinde gewährleistet und gleichzeitig ein vorzeitiger Verschleiß des Gewindebohrers vermieden.

Gemäß einer weiteren Ausgestaltung der Erfindung sind die mindestens eine erste und zweite Kugel in einer gemeinsamen Radialebene angeordnet.

Auf diese Weise ist ein kompakter Aufbau gewährleistet. Außerdem wird eine Möglichkeit für eine leichte Kopplung mit verschiedenen Spannsystemen unterstützt.

Gemäß einer weiteren Ausgestaltung der Erfindung ist die mindestens eine erste Kugel in einer Radialbohrung des Aufnahmeteils aufgenommen.

Hierbei ist die mindestens eine erste Kugel vorzugsweise in einer kugelkalottenförmigen Ausnehmung des Zwischenteils gehalten.

Hierdurch ergibt sich ein einfacher Aufbau und eine einfache Montage.

Gemäß einer weiteren Ausgestaltung der Erfindung ist das Elastomerelement ringförmig ausgebildet und in einer Ausnehmung am Zwischenteil gehalten.

Auf diese Weise kann eine gleichmäßige Kraftübertragung zwischen Kugel und Elastomerelement gewährleistet werden und eine Wirkung der nachgiebigen Kraftübertragung sowohl in Axialrichtung als auch in Drehrichtung unterstützt werden. Auch wird die Zentrierung verbessert.

Gemäß einer weiteren Ausgestaltung der Erfindung ist das Spiel zwischen Aufnahmeteil und Zwischenteil derart bemessen, dass sich in Drehrichtung ein Spiel von ± 0,1° bis 3°, vorzugsweise von ± 0,5° bis 2° ergibt.

Das so bezeichnete Spiel betrifft das Spiel, das sich zwischen einer Umschaltung zwischen dem Gewindeschneidprozess und dem Reversiervorgang, also mit Umkehrung der Drehrichtung, ergibt.

Es hat sich gezeigt, dass mit einem derartigen Spiel die Nachgiebigkeit des Elastomerelementes so weit ausgenutzt werden kann, dass eine optimale Anpassung sowohl beim Beginn des Gewindeschneidvorgangs als auch beim Reversieren gewährleistet ist, so dass qualitativ sehr hochwertige Gewinde geschnitten werden können und gleichzeitig ein vorzeitiger Verschleiß des Gewindebohrers vermieden wird.

Gemäß einer weiteren Ausgestaltung der Erfindung sind mindestens zwei erste Kugeln zur Drehmomentübertragung und mindestens zwei zweite über Elastomerelemente mit dem Spannmittel gekoppelte Kugeln vorgesehen, wobei die ersten und zweiten Kugeln vorzugsweise einander gegenüberliegend angeordnet sind.

Mit dieser symmetrischen Anordnung wird eine gleichmäßige Drehmomentübertragung gewährleistet. Dies verbessert das Ergebnis des Gewindeschneidens.

Gemäß einer weiteren Ausgestaltung der Erfindung ist das Zwischenteil in einer zentralen Bohrung des Aufnahmeteils aufgenommen und in Axialrichtung mittels eines Elastomerelementes gegen das Aufnahmeteil vorgespannt.

Auf diese Weise ist eine elastomer abgefederte Aufnahme der axialen Schnittkraft beim Gewindeschneiden gewährleistet, und gleichzeitig werden die zweiten Kugeln beim Gewindeschneiden in ihrer bevorzugten Mittellage gehalten.

Gemäß einer weiteren Ausgestaltung der Erfindung ist das Aufnahmeteil als das Aufnahmeteil als Wechselelement ausgebildet ist, das zur lösbaren Aufnahme an einem Spannsystem ausgebildet ist, wobei vorzugsweise das Aufnahmeteil in Form einer Spannzange ausgebildet ist, die zur lösbaren Aufnahme an einem Spannzangenfutter vorgesehen ist.

Dadurch, dass das Aufnahmeteil als Wechseleinheit ausgebildet ist, kann das Gewindeschneidfutter auswechselbar an beliebigen Spannsystemen verwendet werden.

Es können so die Vorteile eines herkömmlichen Werkzeugspannsystems mit einem Gewindeschneidfutter zum Synchron-Gewindeschneiden verbunden werden, wenn das Wechselelement mit dem Gewindeschneidfutter an das vorhandene Spannsystem angekoppelt wird.

Hierzu kann etwa das Aufnahmeteil in Form einer Spannzange ausgebildet sein, die zur lösbaren Aufnahme an einem Spannzangenfutter vorgesehen ist. Jedoch ist auch eine Ausgestaltung in Form beliebiger anderer Wechseleinheiten möglich, um eine Ankopplung an einem beliebigen Spannsystem, z.B. an ein Pendelfutter, zu ermöglichen.

Soweit das Aufnahmeteil als Wechseleinheit ausgebildet ist, ist es sinnvoll, ferner am Aufnahmeteil ein Sicherungselement, vorzugsweise in Form eines Rings, zur Sicherung der mindestens einen ersten und zweiten Kugel gegen Herausfallen vorzusehen.

Auf diese Weise wird ein einfacher Wechsel der Wechseleinheit ermöglicht, ohne dass die Gefahr des Herausfallens der Kugeln besteht.

In weiterer Ausgestaltung der Erfindung ist die mindestens eine zweite Kugel derart am Aufnahmeteil gehalten, dass die mindestens eine zweite Kugel über die Außenkontur des Aufnahmeteils nach außen hervorsteht, derart, dass sich beim Einspannen an einem zugeordneten Spannsystem, wie etwa an einem Spannzangenfutter, eine Vorspannung auf das zugeordnete Elastomerelement ergibt.

Auf diese Weise wird die gewünschte Vorspannung auf das Elastomerelement beim Einbau des Gewindeschneidfutters mit seinem Aufnahmeteil an dem zugeordneten Futter, wie etwa einem Spannzangenfutter, gewährleistet.

In einer weiteren Ausgestaltung der Erfindung ist das Zwischenteil mit dem Aufnahmeteil verschraubt.

Eine derartige Ausführung ist sinnvoll, wenn eine Auswechselbarkeit des Gewindeschneidfutters nicht vorgesehen ist. In diesem Fall kann das Gewindeschneidfutter unmittelbar an einem zugeordneten Futter, z.B. einem üblichen HSK-Futter, durch eine Verschraubung befestigt werden.

In weiter vorteilhafter Ausgestaltung der Erfindung ist die mindestens eine zweite Kugel durch die Überwurfmutter gegen das Elastomerelement vorgespannt.

Auf diese Weise kann die gewünschte Vorspannung des Elastomerelements bei der Befestigung mittels der Überwurfmutter in definierter Weise erzeugt werden.

Gemäß einer weiteren Ausgestaltung der Erfindung sind die mindestens eine erste Kugel und die mindestens eine zweite Kugel jeweils radial beweglich im Aufnahmeteil gehalten und über zumindest ein im äußeren Bereich des Aufnahmeteils angeordnetes Elastomerelement gegenüber dem Zwischenteil elastisch vorgespannt.

Dies hat besondere Vorteile, wenn Werkzeuge mit besonders geringem Durchmesser gespannt werden sollen, um besonders feine Gewinde schneiden zu können. In einem solchen Fall wären die sonst innenliegend angeordneten Elastomerelemente nachteilig, da der Bauraum für kleine Werkzeuge zu groß ist. Dadurch, dass das zumindest eine Elastomerelement in den äußeren Bereich verlegt wurde, kann so eine kleinere Bauform erzielt werden, die zum Schneiden von besonders feinen Gewinden eingesetzt werden kann.

In vorteilhafter Weiterbildung dieser Ausführung sind die mindestens eine erste und zweite Kugel jeweils über ein Elastomerelement derart mit dem Zwischenteil gekoppelt sind, dass sich eine über die Elastomerelemente abgefederte Nachgiebigkeit in Axialrichtung und in Drehrichtung ergibt.

Auf diese Weise ergibt sich eine gezielte Abstützung sowohl in Axialrichtung als auch in Drehrichtung, die besonders zum Synchron-Gewindeschneiden geeignet ist.

Gemäß einer weiteren Ausgestaltung der Erfindung sind die mindestens eine erste und zweite Kugel jeweils in einer Radialbohrung des Aufnahmeteils beweglich gehalten und in vorzugsweise kugelkalottenförmigen Ausnehmungen des Zwischenteils mit einem Spiel gehalten.

Auf diese Weise kann ein besonders geeignetes Spiel sowohl in Axialrichtung als auch in Drehrichtung gewährleistet werden.

Gemäß einem weiteren Merkmal der Erfindung ist mindestens ein sich in einer Umfangsnut des Aufnahmeteils erstreckender Elastomerring vorgesehen, der an der mindestens einen ersten und zweiten Kugel anliegt und der über die Außenkontur des Aufnahmeteils nach außen hervorsteht, derart, dass sich beim Einspannen an einem zugeordneten Futter, insbesondere an einem Spannzangenfutter, eine Vorspannung auf den Elastomerring ergibt.

Dies führt zu einem besonders einfachen und platzsparenden Aufbau, der besonders für kleine Werkzeugdurchmesser geeignet ist.

Bevorzugt sind hierbei die ersten und zweiten Kugeln zwischen zwei Elastomerringen elastisch gehalten, die auf beiden Seiten an den ersten und zweiten Kugeln anliegen.

Auf diese Weise ergibt sich eine definierte Vorspannung in beiden Drehrichtungen und eine definierte elastische Nachgiebigkeit beim Synchron-Gewindeschneiden.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine perspektivische Ansicht einer ersten Ausführung eines erfindungsgemäßen Gewindeschneidfutters;
- Fig. 2: einen vergrößerten Längsschnitt durch das Gewindeschneidfutter gemäß Fig. 1;
- Fig. 3: einen Längsschnitt gemäß Fig. 2, jedoch durch eine Schnittebene, die um 90° gegenüber der Schnittebene gemäß Fig. 2 verdreht ist;
- Fig. 4: einen Schnitt durch das Gewindeschneidfutter gemäß Fig. 3 längs der Linie IV-IV;
- Fig. 5: eine weitere Ausgestaltung eines erfindungsgemäßen Gewindeschneidfutters im Längsschnitt;
- Fig. 6: einen Teilschnitt durch das Gewindeschneidfutter gemäß Fig. 5, jedoch mit einer um 90° gegenüber der Schnittebene gemäß Fig. 5 versetzten Schnittebene;
- Fig. 7: einen Querschnitt durch das Gewindeschneidfutter gemäß Fig. 5 längs der Linie VII-VII;
- Fig. 8: eine perspektivische Ansicht einer weiteren Abwandlung eines Gewindeschneidfutters;
- Fig. 9: eine perspektive Schnittdarstellung des Gewindeschneidfutters gemäß Fig. 8;
- Fig. 10: einen Querschnitt durch das Gewindeschneidfutter gemäß Fig. 9 in einer Radialebene der Kugeln;
- Fig. 11: einen Längsschnitt durch das Gewindeschneidfutter gemäß Fig. 9 und
- Fig. 12: einen Längsschnitt durch das Gewindeschneidfutter gemäß Fig. 9, jedoch in einer gegenüber der Darstellung in Fig. 11 um 90° gedrehten Schnittebene.

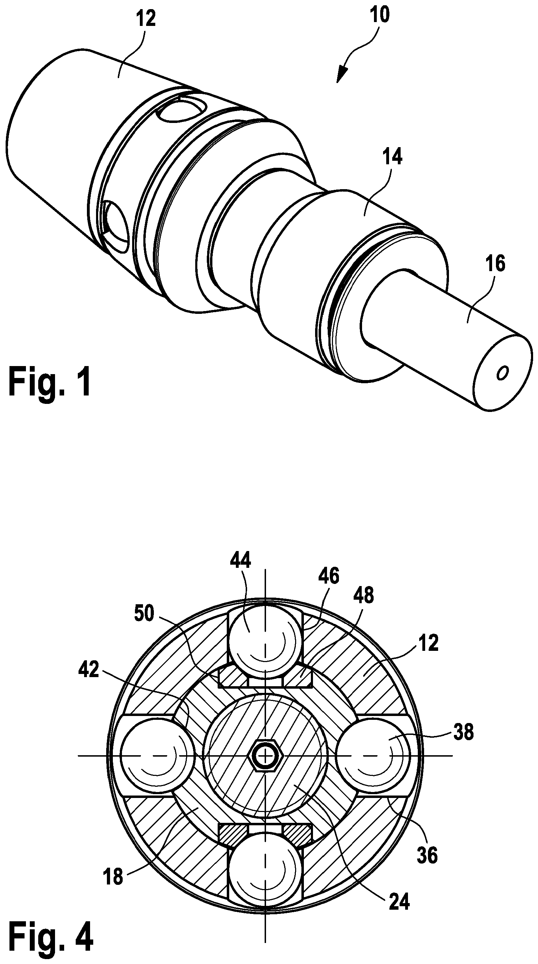

Fig. 1 zeigt eine erste Ausführungsform eines erfindungsgemäßen Gewindeschneidfutters zum Synchron-Gewindeschneiden, das insgesamt mit der Ziffer 10 bezeichnet ist, in perspektivischer Darstellung.

Das Gewindeschneidfutter 10 weist ein konusförmiges Aufnahmeteil 12 in Form einer Spannzange auf, an der ein Spannmittel 14 in Form einer Schnellwechseleinrichtung zur Aufnahme eines Gewindebohrers 16 vorgesehen ist. Der Gewindebohrer 16 ist in Fig. 1 lediglich mit seinem Schaft ohne den dazugehörigen Gewindeschneidkopf dargestellt.

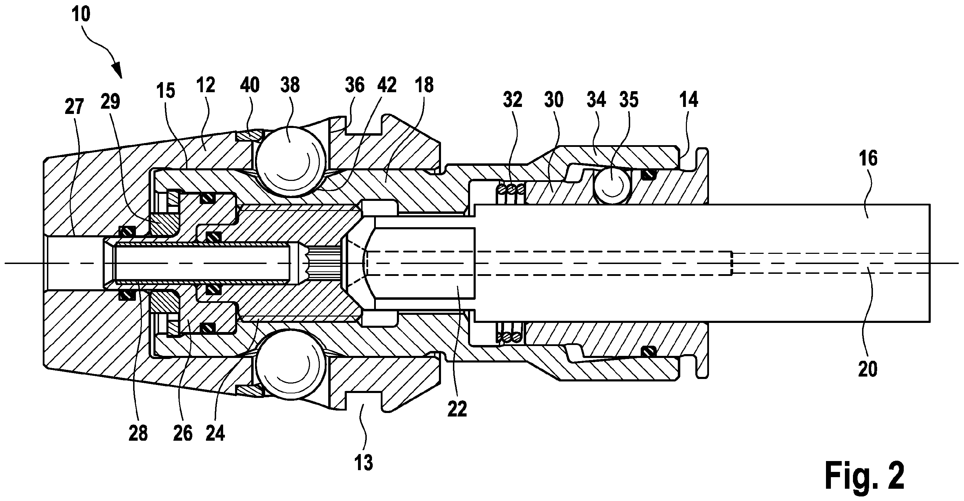

Der Aufbau des Gewindeschneidfutters 10 ist aus den Fig. 2 bis 4 näher ersichtlich.

Das konusförmige Aufnahmeteil 12 ist zur Aufnahme an einem Spannzangenfutter ausgebildet und weist an seinem vorderen Ende eine umlaufende Ringnut 13 auf. In einer zylindrischen, zentralen Bohrung 15 des Aufnahmeteils 12 ist ein Zwischenteil 18 gehalten, an dessen äußerem Ende das Spannmittel in Form einer Schnellwechseleinrichtung 14 bekannter Bauart vorgesehen ist. Die Schnellwechseleinrichtung 14 weist eine mittels einer Feder 32 nach außen hin vorgespannte Hülse 30 auf, die an einem Innenkonus 34 unter der Wirkung der Vorspannung der Feder 32 gehalten ist, wobei zugeordnete Spannkugeln 35 gegen die Oberfläche des Schaftes 22 des Gewindebohrers 16 gespannt sind.

Zum Wechseln des Gewindebohrers 16 muss lediglich die Hülse 30 der Schnellwechseleinrichtung 14 gegen die Kraft der Feder nach innen bewegt werden, wodurch der Schaft 22 des Gewindebohrers 16 freigegeben wird und nach außen herausgezogen werden kann.

Der Gewindebohrer 16 liegt an einer zentralen Stellschraube 24 an, die in ein zugeordnetes Gewinde des Zwischenteils 18 eingeschraubt ist und eine axiale Einstellung der Endlage des Gewindebohrers 16 erlaubt. Die Stellschraube 24 liegt an einer Dichtbuchse 26 an, die in eine zentrale Bohrung 27 des Aufnahmeteils 12 hineinragt und unter Zwischenlage eines Elastomerrings 29 an einem Absatz am Ende der Bohrung 15 des Aufnahmeteils 12 gehalten ist. Die Dichtbuchse 26 und die Stellschraube 24 umschließen ein Rohr 28, über das Kühlschmiermittel zur Minimalmengenschmierung in einen zentralen Schmiermittelkanal 20 des Werkzeugschaftes 22 zugeführt werden kann.

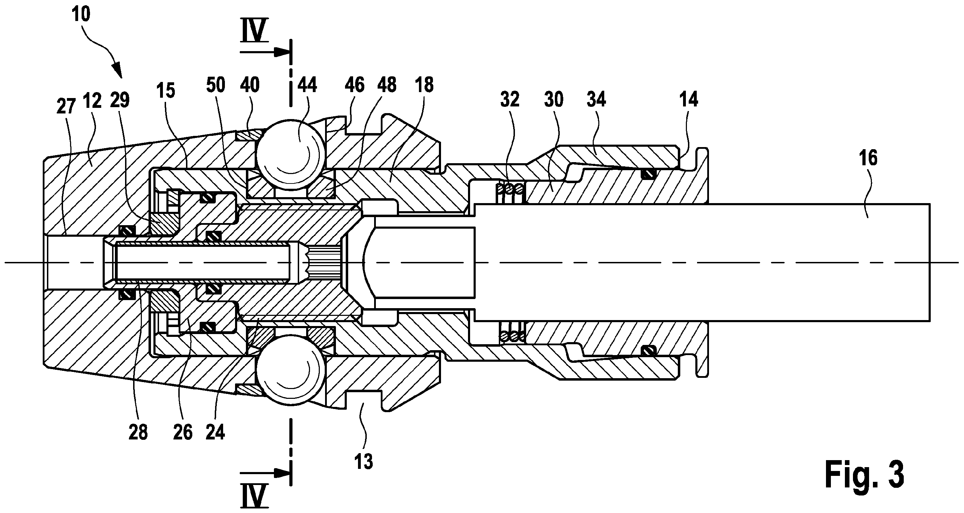

Um ein Synchron-Gewindeschneiden zu ermöglichen, ist nun das Zwischenteil 18 mittels zweier erster Kugeln 38, die um 180° zueinander versetzt angeordnet sind (vgl. Fig. 2) und mittels zweier zweiter Kugeln 44, die gleichfalls um 180° zueinander versetzt angeordnet sind und mit Elastomerelementen 48 zusammenwirken (vgl. Fig. 3), am Aufnahmeteil 12 in Axialrichtung und in Drehrichtung mit einer gewissen Nachgiebigkeit gehalten.

Wie insbesondere aus Fig. 4 ersichtlich ist, sind die ersten Kugeln 38 in Radialbohrungen 36 des Aufnahmeteils 12 mit Spiel aufgenommen und in kugelkalottenförmigen Ausnehmungen 42 des Zwischenteils 18 gehalten. Die Radialbohrungen 36 sind zylindrisch ausgeführt und weisen zu den ersten Kugeln 38 ein Spiel auf, das sowohl in Drehrichtung als auch in Axialrichtung eine gewisse Beweglichkeit der Kugeln 38 und damit des Zwischenteils 18 relativ zum Aufnahmeteil 12 erlauben.

Die zweiten Kugeln 44, die gegenüber den ersten Kugeln jeweils um 90° versetzt angeordnet sind, sind in zugeordneten Radialbohrungen 46 des Aufnahmeteils 12 radial beweglich aufgenommen und liegen jeweils an einem ringförmigen Elastomerelement 48 an, das in einer zugeordneten zylindrischen Bohrung 50 des Zwischenteils 18 gehalten ist.

Die ersten und zweiten Kugeln 38, 44 sind vorteilhaft durch einen Sicherungsring 40 aus elastomerem Material gegen ein Herausfallen aus den zugeordneten Radialbohrungen 36 bzw. 46 gesichert.

Wie aus Fig. 3 zu ersehen ist, sind hierbei die zweiten Kugeln 44 mit einem gewissen Überstand über die kegelförmige Außenkontur des Aufnahmeteils hinaus nach außen gehalten. Wird das Aufnahmeteil 12 an einem Spannzangenfutter eingespannt, so kommt die Außenkontur der kegelförmigen Spannzange 12 an einer zugeordneten Innenkontur des Spannzangenfutters zur Anlage, wodurch die zweiten Kugeln 44 radial nach innen gedrückt werden, wodurch die Elastomerelemente 48 unter Vorspannung gesetzt werden. Dadurch ist der Gewindebohrer 20 über das Zwischenteil 18 in einer präzisen axialen Mittellage gehalten und in Drehrichtung gleichfalls in einer präzisen mittleren Lage positioniert.

Um den für das Gewindeschneiden erforderlichen Anschnittdruck zu erzielen und gleichzeitig die zweiten Kugeln 44 während des Gewindeschneidvorgangs in der bevorzugten Mittellage zu halten, wird das Zwischenteil 18 mittels eines weiteren Elastomerrings 29 in axialer Richtung vorgespannt.

Dagegen ist das Spiel zwischen den Radialbohrungen 36 und den zugeordneten ersten Kugeln 38 derart bemessen, dass sich in Drehrichtung ein Spiel von etwa ± 1,7° zwischen Antriebsbewegung und Drehrichtungsumkehr beim Reversieren ergibt.

Zu Beginn des Gewindeschneidvorgangs wird demnach das Drehmoment zunächst ausschließlich über die zweiten Kugeln 44 und die zugeordneten Elastomerelemente 48 übertragen. Erst wenn diese so weit nachgegeben haben, dass die ersten Kugeln 38 in ihren zugeordneten Radialbohrungen 36 zur Anlage gelangen, wird das Drehmoment starr zwischen dem Aufnahmeteil 12 und dem Zwischenteil 18 übertragen.

Beim Reversieren ergibt sich zunächst wieder eine Übertragung über die Elastomerelemente 48, bevor die ersten Kugeln 38 an der anderen Seite ihrer zugeordneten Radialbohrungen 36 zur Anlage gelangen und dann das Drehmoment vollständig übertragen.

Wie aus Fig. 4 zu ersehen ist, sind die ersten und zweiten Kugeln 38, 44 in einer gemeinsamen Radialebene angeordnet, wodurch sich ein sehr einfacher, kompakter Aufbau ergibt, der die Wechselbarkeit des Gewindeschneidfutters 10 zur Befestigung an verschiedenen Spannsystemen unterstützt.

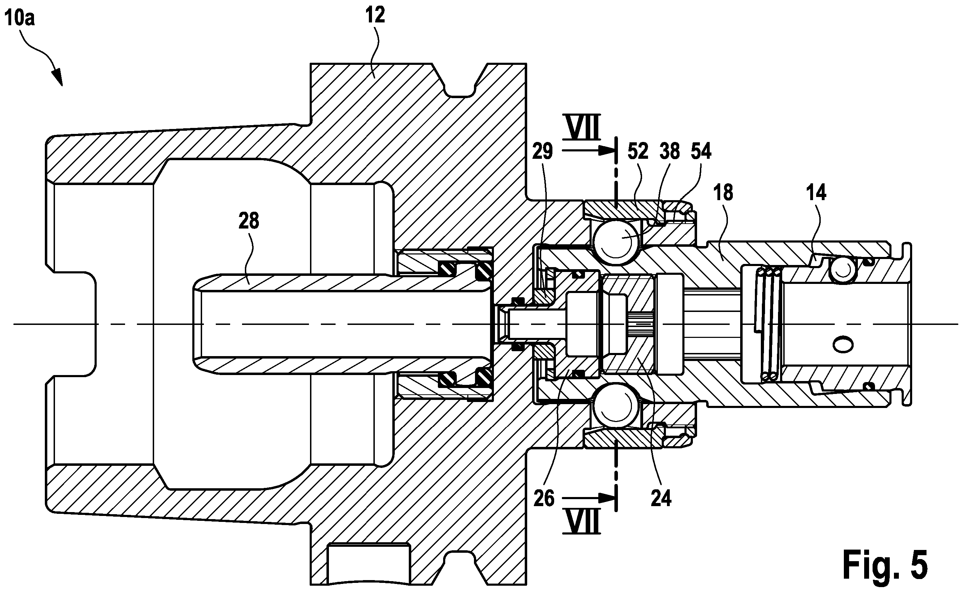

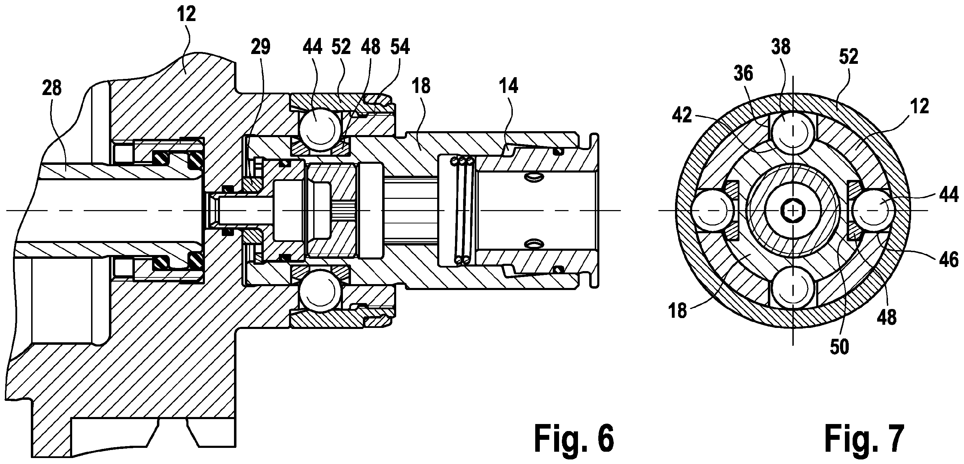

In den Fig. 5 bis 7 ist eine alternative Ausführung des erfindungsgemäßen Gewindeschneidfutters dargestellt und insgesamt mit 10a bezeichnet. Entsprechende Teile sind hierbei mit entsprechenden Bezugsziffern gekennzeichnet.

Der wesentliche Unterschied zur zuvor anhand der Fig. 1 bis 4 beschriebenen Ausführung liegt darin, dass die aus dem Gewindeschneidfutter zum Synchron-Gewindeschneiden gebildete Einheit nicht als wechselbare Spannzange an einem Aufnahmeteil ausgebildet ist, sondern an einem Aufnahmeteil 12 in HSK-Form mittels einer Verschraubung gehalten ist.

Auch hierbei ist zur Aufnahme des Gewindebohrers am äußeren Ende des Zwischenteils 18 eine Schnellwechseleinrichtung 14 angeordnet, die in der zuvor anhand von Fig. 2 beschriebenen Weise ausgebildet ist. Um eine definierte axiale Endlage für den Schaft des Gewindebohrers 16 zu gewährleisten, ist eine Stellschraube 24 in einem Gewinde des Zwischenteils 18 axial verstellbar gehalten. An die Stellschraube 24 schließt sich eine Dichtbuchse 26 an, die unter Zwischenlage eines Elastomerrings 29 am axialen Ende der zentralen Bohrung 15 des Zwischenteils anliegt. Über ein zugeordnetes Rohr 28 kann von der Maschinenseite her Kühlschmiermittel zur Minimalmengenschmierung in eine zugeordnete axiale Bohrung des Gewindebohrers 16 zugeführt werden.

Das Zwischenteil 18 ist mittels einer Überwurfmutter 52, die auf ein Außengewinde 54 am axialen Ende des Aufnahmeteils 12 aufgeschraubt ist, mit dem Aufnahmeteil 12 fest verbunden. Hierbei weisen wiederum die zweiten Kugeln 44 einen gewissen Überstand nach außen auf, so dass diese in der montierten Position mit einer radialen Vorspannung gegenüber den Elastomerelementen 48 gehalten sind.

Im Übrigen entsprechen Aufbau und Funktionsweise vollständig derjenigen des Gewindeschneidfutters gemäß der Fig. 1 bis 4.

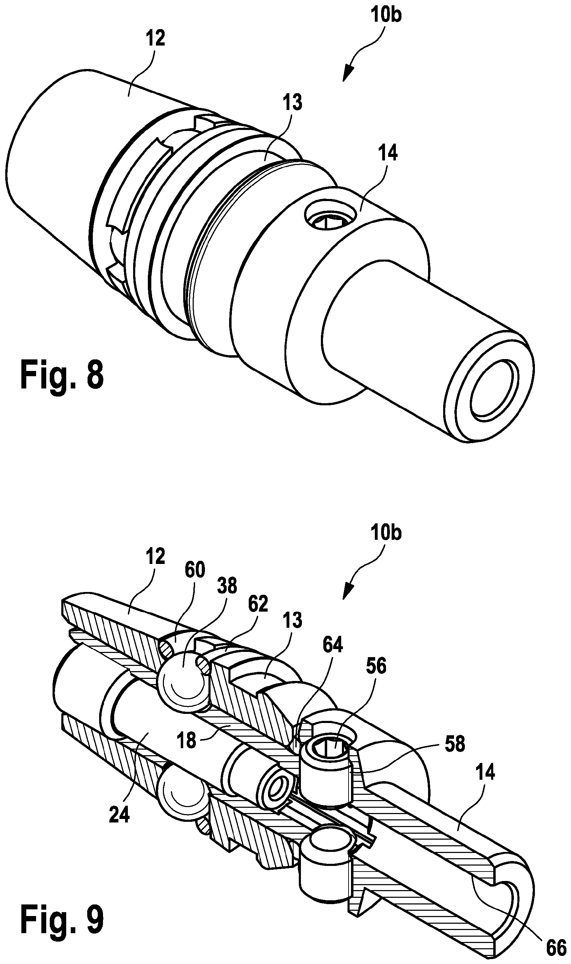

Anhand der Figuren 8 bis 12 wird nunmehr eine weitere Abwandlung des erfindungsgemäßen Gewindeschneidfutters, die insgesamt mit 10b bezeichnet ist, näher erläutert.

Dabei werden für entsprechende Teile entsprechende Bezugsziffern verwendet.

Der wesentliche Unterschied zu der Ausführung gemäß der Figuren 1 bis 4 besteht darin, dass anstelle von innen liegenden Elastomerelementen nunmehr zwei außen liegende Elastomerelemente in Form von Umfangsringen vorgesehen sind. Dies ermöglicht eine besonders kompakte Bauform, die insbesondere zur Aufnahme von Gewindeschneidwerkzeugen für sehr kleine Gewinde, z.B. bis zu M1, geeignet ist.

Auf eine Innenkühlung wurde hierbei verzichtet.

Fig. 8 zeigt eine perspektivische Ansicht des Gewindeschneidfutters 10b. Zu erkennen sind das kegelförmige Aufnahmeteil 12 mit der äußeren Ringnut 13 zum Spannen an einem Spannzangenfutter (nicht dargestellt), sowie das Spannmittel 14.

Im vorliegenden Fall ist das Spannmittel 12 beispielhaft mit zwei Spannschrauben 56 dargestellt, die in zugeordneten radialen Gewinden 58 verstellbar sind (Fig. 9), ausgebildet. Das Spannmittel 12 ist hierbei am äußeren Ende des Zwischenteils 18 ausgebildet.

Es versteht sich, dass stattdessen das Spannmittel auch als Schnellwechseleinrichtung gemäß Fig. 1 bis 5 oder etwa als Schrumpfspannaufnahme ausgebildet sein könnte, was besonders für kleine Werkzeugdurchmesser geeignet ist.

Fig. 9 zeigt eine einfache Ausführung des Spannmittels 14 mit den zwei Spannschrauben 56, die in den radialen Gewinden 58 aufgenommen sind. Ein Werkzeug (nicht dargestellt) ist hierbei mit seinem Schaft in einer Aufnahmebohrung gehalten und kann mittels der Spannschrauben 56 gespannt werden. Um eine definierte axiale Endlage des Werkzeugs zu gewährleisten, ist eine Stellschraube 24 wie bei der Ausführung gemäß Fig. 1 bis 5 axial verstellbar vorgesehen, die als Anschlag für das Werkzeug dient. Eine Kühlmittelzufuhr ist bei dieser Ausführung nicht vorgesehen.

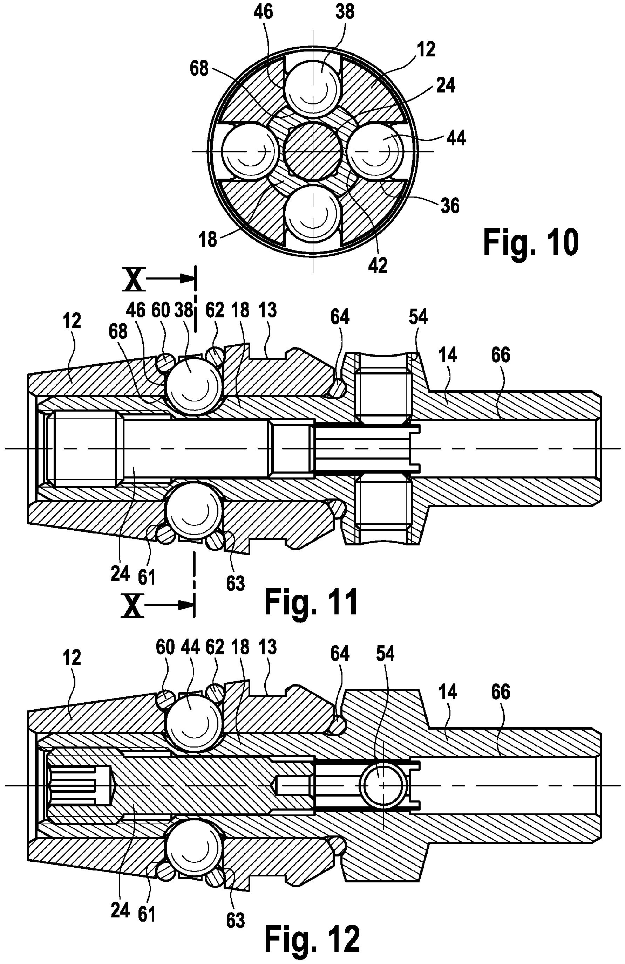

Das Zwischenteil 18, an dessen äußerem Ende das Spannmittel 14 ausgebildet ist, ist über insgesamt vier Kugeln 38, 44 elastisch nachgiebig mit dem Aufnahmeteil 12 gekoppelt. In Fig. 10 sind die Kugeln 38, 44 in einem Radialschnitt zu sehen. Im Unterschied zu der Ausführung gemäß der Fig. 1 bis 7 sind die beiden ersten Kugeln 38 und die beiden zweiten Kugeln 44 identisch ausgebildet und angeordnet. Die ersten Kugeln 38 sind in Radialbohrungen 46 des Aufnahmeteils 12 beweglich aufgenommen. Gleichermaßen sind die zweiten Kugeln 44 beweglich in zugeordneten Radialbohrungen 36 des Aufnahmeteils 12 aufgenommen. Die ersten und zweiten Kugeln 38, 44 sind im Zwischenteil 38 in zugeordneten kugelkalottenförmigen Vertiefungen oder Ausnehmungen gehalten, deren Radius etwas größer als der Radius der Kugeln 38, 44 ist, so dass sich ein gewisses Spiel sowohl in Axialrichtung als auch in Drehrichtung ergibt.

Ferner sind zwei Elastomerringe 60, 62 vorgesehen, die in Umfangsrichtung des Aufnahmeteils 12 verlaufen und in zugeordneten Umfangsnuten 61, 63 gehalten sind, derart, dass sie an den ersten und zweiten Kugeln 38, 44 von beiden Seiten von außen anliegen.

Beim Einspannen des Gewindeschneidfutters 10b in einer Spannzange werden die beiden Elastomerringen 60, 62, die etwas über Außenkontur hervorstehen, gegen die Kugeln 38, 44 von außen vorgespannt, so dass die Elastomerringe durch die Kugeln 38, 44 lokal zusammengequetscht sind. Es ergibt sich so eine bestimmte Ruhelage des Zwischenteils 18 in Bezug auf das Aufnahmeteil 12.

Wird nun ein Gewindeschneidvorgang gestartet, so wandern die Kugeln 38, 44 zunächst in Drehrichtung an den Elastomerringen 60, 62 aus, bis die Kugeln 38, 44 in den zugeordneten kugelkalottenförmigen Ausnehmungen 42, 68 zum Anschlag gelangen und das Drehmoment formschlüssig übertragen wird.

Zu Beginn eines Gewindeschneidvorgangs ergibt sich also ein elastisches Nachgeben über die Elastomerringe 60, 62. Das durch die Kugeln 38, 44 und die kugelkalottenförmigen Ausnehmungen 42, 68 vorgegebene Spiel zwischen Aufnahmeteil 12 und Zwischenteil beträgt 18 ± 0,1° bis 3°, vorzugsweise ± 0,5° bis 2°, was auch dem Spiel gemäß der beiden ersten Ausführungen gemäß Fig. 1 bis 5 bzw. 6 und 7 entspricht. Das Maximalspiel tritt beim Reversieren, d.h. bei der Umkehrung der Drehrichtung am Ende des Gewindeschneidvorgangs zum Herausdrehen des Gewindebohrers auf.

Um den für das Gewindeschneiden erforderlichen Anschnittdruck zu erzielen und gleichzeitig die ersten und zweiten Kugeln 44 während des Gewindeschneidvorgangs in der bevorzugten Mittellage zu halten, ist das Zwischenteil 18 wie bei der Ausführung gemäß der Fig. 1 bis 7 mittels eines weiteren Elastomerrings 64 in axialer Richtung vorgespannt.

## Patentansprüche

1. Gewindeschneidfutter zum Synchron-Gewindeschneiden, mit einem Aufnahmeteil (12) zum maschinenseitigen Antrieb, und mit einem Spannmittel (14) für einen Gewindebohrer (16), zwischen denen ein Zwischenteil (18) angeordnet ist, wobei das Zwischenteil (18) mit dem Aufnahmeteil (12) in Axialrichtung über mindestens ein Elastomerelement (48; 60, 62) nachgiebig verbunden ist, wobei mindestens eine erste Kugel (38) zur Drehmomentübertragung zwischen dem Aufnahmeteil (12) und dem Zwischenteil (18) mit einem Spiel in Axialrichtung aufgenommen ist, **dadurch gekennzeichnet, dass** die mindestens eine erste Kugel (38) mit einem Spiel in Drehrichtung aufgenommen ist, dass mindestens eine zweite Kugel (44) in Radialrichtung beweglich im Aufnahmeteil (12) aufgenommen ist, die über das Elastomerelement (48; 60, 62) derart mit dem Spannmittel (14) gekoppelt ist, dass sich eine über das Elastomerelement (48; 60, 62) abgefederte Nachgiebigkeit in Axialrichtung und in Drehrichtung ergibt.

2. Gewindeschneidfutter nach Anspruch 1, **dadurch gekennzeichnet, dass** die mindestens eine zweite Kugel (44) gegenüber dem Elastomerelement (48) in Radialrichtung vorgespannt ist.

3. Gewindeschneidfutter nach Anspruch 1 oder 2, **dadurch gekennzeichnet, dass** das Spiel der mindestens einen ersten Kugel (38) derart bemessen ist, dass sich beim Gewindeschneiden und beim Reversieren zunächst eine über das Elastomerelement (48; 60, 62) abgefederte Drehmomentübertragung ergibt, bevor eine Mitnahme über die erste Kugel (38) erfolgt.

4. Gewindeschneidfutter nach einem der vorhergehenden Ansprüche, **dadurch gekennzeichnet, dass** die mindestens eine erste (38) und zweite (44) Kugel in einer gemeinsamen Radialebene angeordnet sind.

5. Gewindeschneidfutter nach einem der vorhergehenden Ansprüche, **dadurch gekennzeichnet, dass** die mindestens eine erste Kugel (38) in einer Radialbohrung (36) des Aufnahmeteils (12) aufgenommen ist, und dass das Elastomerelement (48) vorzugsweise ringförmig ausgebildet ist und in einer Ausnehmung (50) am Zwischenteil (18) gehalten ist.

6. Gewindeschneidfutter nach einem der vorhergehenden Ansprüche, **dadurch gekennzeichnet, dass** das Spiel zwischen Aufnahmeteil (12) und Zwischenteil (18) derart bemessen ist, dass sich in Drehrichtung ein Spiel von ± 0,1° bis 3°, vorzugsweise von ± 0,5° bis 2° ergibt.

7. Gewindeschneidfutter nach einem der vorhergehenden Ansprüche, **dadurch gekennzeichnet, dass** mindestens zwei erste Kugeln (38) zur Drehmomentübertragung und mindestens zwei zweite über Elastomerelemente (48) mit dem Spannmittel (14) gekoppelte Kugeln (44) vorgesehen sind, und dass die ersten Kugeln (38) und die zweiten Kugeln (44) vorzugsweise einander gegenüberliegend angeordnet sind.

8. Gewindeschneidfutter nach einem der vorhergehenden Ansprüche, **dadurch gekennzeichnet, dass** das Zwischenteil (18) in einer zentralen Bohrung (15) des Aufnahmeteils (12) aufgenommen ist und in Axialrichtung mittels eines Elastomerelementes (29) gegen das Aufnahmeteil (12) vorgespannt ist.

9. Gewindeschneidfutter nach einem der vorhergehenden Ansprüche, **dadurch gekennzeichnet, dass** das Aufnahmeteil (12) als Wechselelement ausgebildet ist, das zur lösbaren Aufnahme an einem Spannsystem ausgebildet ist, wobei vorzugsweise das Aufnahmeteil (12) in Form einer Spannzange ausgebildet ist, die zur lösbaren Aufnahme an einem Spannzangenfutter vorgesehen ist.

10. Gewindeschneidfutter nach Anspruch 9, **dadurch gekennzeichnet, dass** am Aufnahmeteil (12) ein Sicherungselement (40), vorzugsweise in Form eines Rings, zur Sicherung der mindestens einen ersten (38) und zweiten (44) Kugel gegen Herausfallen vorgesehen ist.

11. Gewindeschneidfutter nach Anspruch 9 oder 10, **dadurch gekennzeichnet, dass** die mindestens eine zweite Kugel (44) derart im Aufnahmeteil (12) gehalten ist, dass die mindestens eine zweite Kugel (44) über die Außenkontur des Aufnahmeteils (12) nach außen hervorsteht, derart, dass sich beim Einspannen an einem zugeordneten Futter, insbesondere an einem Spannzangenfutter, eine Vorspannung auf das zugeordnete Elastomerelement (48) ergibt.

12. Gewindeschneidfutter nach einem der Ansprüche 9 bis 11, **dadurch gekennzeichnet, dass** das Zwischenteil (18) vorzugsweise mittels einer Überwurfmutter (52) mit dem Aufnahmeteil (12) verschraubt ist, wobei die mindestens eine zweite Kugel (44) vorzugsweise durch die Überwurfmutter (52) gegen das Elastomerelement (48) vorgespannt ist.

13. Gewindeschneidfutter nach einem der Ansprüche 1 bis 12, **dadurch gekennzeichnet, dass** die mindestens eine erste Kugel (38) und die mindestens eine zweite Kugel (44) jeweils radial beweglich im Aufnahmeteil (12) gehalten sind und über zumindest ein im äußeren Bereich des Aufnahmeteils (12) angeordnetes Elastomerelement (60, 62) gegenüber dem Zwischenteil (18) elastisch vorgespannt sind, wobei die mindestens eine erste (38) und die mindestens eine zweite Kugel (44) vorzugsweise jeweils über ein Elastomerelement (60, 62) derart mit dem Zwischenteil (18) gekoppelt sind, dass sich eine über die Elastomerelemente (60, 62) abgefederte Nachgiebigkeit in Axialrichtung und in Drehrichtung ergibt.

14. Gewindeschneidfutter nach Anspruch 13, **dadurch gekennzeichnet, dass** die mindestens eine erste (38) und zweite Kugel (44) jeweils in einer Radialbohrung (46, 36) des Aufnahmeteils (12) beweglich gehalten sind und in vorzugsweise kugelkalottenförmigen Ausnehmungen (68, 42) des Zwischenteils mit einem Spiel gehalten sind.

15. Gewindeschneidfutter nach Anspruch13 oder 14, **dadurch gekennzeichnet, dass** mindestens ein sich in einer Umfangsnut (61, 63) des Aufnahmeteils (12) erstreckender Elastomerring (60, 62) vorgesehen ist, der an den ersten (38) und zweiten (44) Kugeln anliegt und der über die Außenkontur des Aufnahmeteils (12) nach außen hervorsteht, derart, dass sich beim Einspannen an einem zugeordneten Futter, insbesondere an einem Spannzangenfutter, eine Vorspannung auf den Elastomerring (60, 62) ergibt, wobei die ersten (38) und zweiten (44) Kugeln vorzugsweise zwischen zwei Elastomerringen (60, 62) elastisch gehalten sind, die auf beiden Seiten an der mindestens einen ersten (38) und zweiten (44) Kugel anliegen.

## Claims

1. Tap-holding chuck for synchronized thread cutting, comprising a receiving part (12) for machine-side driving, and a clamping means (14) for receiving a tap (16), between which an intermediate part (18) is arranged, wherein the intermediate part (18) is connected to the receiving part (12) in axial direction via at least one elastomer element (48; 60, 62), in an elastic way, wherein at least one first ball (38) is received with a play in axial direction between the receiving part (12) and the intermediate part (18) for transferring torque, **characterized in that** the at least one first ball (38) is received in rotary direction with play, **in that** at least one second ball (44) is received movably in radial direction within the receiving part (12), and is coupled via the elastomer element (48; 60, 62) with the clamping means (14) so that a yielding in axial direction and in rotary direction results which is resilient by means of the elastomer element (48; 60, 62).

2. Tap-holding chuck according to claim 1, **characterized in that** the at least one second ball (44) is biased in radial direction with respect to the elastomer element (48).

3. Tap-holding chuck according to claim 1 or 2, **characterized in that** the play of the at least one first ball (38) is sized so that, during tapping and during reversing initially a torque transmittance results which is yielding via the elastomer element (48; 60, 62), before a catching via the first ball (38) results.

4. Tap-holding chuck according to any of the preceding claims, **characterized in that** the at least one first (38) and second (44) balls are arrangd in a common radial plane.

5. Tap-holding chuck according to any of the preceding claims, **characterized in that** the at least one first ball (38) is received within a radial bore (36) of the receiving part (12), and **in that** the elastomer element (48) is preferably shaped annular and received within a recess (50) on the intermediate part (18).

6. Tap-holding chuck according to any of the preceding claims, **characterized in that** the play between the receiving part (12) and the intermediate part (18) is sized so that in rotary direction a play of ± 0.1° to 3°, preferably of ± 0.5° to 2°, results.

7. Tap-holding chuck according to any of the preceding claims, **characterized in that** at least two first balls (38) are provided for torque transmission, that at least two second balls (44) are provided that are coupled by means of elastic elements (48) to the clamping means (14), and **in that** the second balls (44) preferably are arranged opposite to each other.

8. Tap-holding chuck according to any of the preceding claims, **characterized in that** the intermediate part (18) is received within a central bore (15) of the receiving part (12) and is biased in axial direction against the receiving part (12) by means of an elastomer element (29).

9. Tap-holding chuck according to any of the preceding claims, **characterized in that** the receiving part (12) the receiving part (12) is configured as an exchangeable element that is configured for a releasable receiving on a clamping system, wherein preferably the receiving part (12) is configured as a split chuck that is configured for a releasable reception on a draw-in collet chuck.

10. Tap-holding chuck according to claim 9, **characterized in that** on the receiving part (12) there is provided a guiding element (40) being preferably configured as a ring for guiding against a dropping out of the first (38) and second (44) balls.

11. Tap-holding chuck according to claim 9 or 10, **characterized in that** the at least one second ball (44) is held within the receiving part (12) such that the at least one second ball (44) protrudes outside beyond the outer periphery of the receiving part (12), so that during clamping on an assigned chuck, in particular a draw-in collet check, there results a bias with respect to the assigned elastomer element (48).

12. Tap-holding chuck according to any of claims 9 to 11, **characterized in that** the intermediate part (18) preferably is screw-connected to the receiving part (12) by means of a sleeve nut (52).

13. Tap-holding chuck according to any of claims 1 to 12, **characterized in that** the at least one first ball (38) and the at least one second ball (44) are each held within the receiving part (12) radially movably and are biased elastically with respect to the intermediate part (18) at least within the outer region of the receiving part (12) by means of an elastomer element (60, 62), wherein the at least one first (38) and the at least one second ball (44) preferably are coupled to the intermediate part (18) each by an elastomer element (60, 62) respectively, so that a yielding in axial direction and in rotary direction results which is resilient by means of the elastomer elements (60, 62).

14. Tap-holding chuck according to claim 13, **characterized in that** the at least one first (38) and second balls (44) are each held movably within a radial bore (46, 36) of the receiving part (12) respectively, and preferably are received within spherical cap shaped recesses (68, 42) of the intermediate part including a play.

15. Tap-holding chuck according to claim 13 or 14, **characterized in that** at least one elastomer ring (60, 62) is provided extending within a peripheral groove (61, 63) of the receiving part (12) and resting against the first (38) and the second (44) balls and protruding beyond the outer periphery of the receiving part (12) so that during clamping on an assigned chuck, in particular on a draw-in collet chuck, there results a bias onto the elastomer ring (60, 62), wherein the first (38) and the second (44) balls preferably are held elastically between two elastomer rings (60, 62) which on both sides rest against the at least one first (38) and second (44) balls.

## Revendications

1. Mandrin porte-taraud pour le taraudage synchronisé, comportant une partie de réception (12) pour l'entraînement côté machine, et un moyen de serrage (14) pour un taraud (16), entre lesquels est disposée une partie intermédiaire (18), la partie intermédiaire (18) étant reliée à la partie de réception (12) de manière flexible dans la direction axiale par le biais d'au moins un élément élastomère (48 ; 60, 62), au moins une première bille (38) étant reçue avec jeu dans la direction axiale entre la partie de réception (12) et la partie intermédiaire (18) pour la transmission de couple, **caractérisé en ce que** l'au moins une première bille (38) est reçue avec jeu dans la direction de rotation, **en ce qu'**au moins une deuxième bille (44) est reçue dans la partie de réception (12) de manière mobile dans la direction radiale, laquelle deuxième bille est accouplée au moyen de serrage (14) par le biais de l'élément élastomère (48 ; 60, 62), de telle sorte qu'il en résulte une flexibilité amortie par le biais de l'élément élastomère (48 ; 60, 62) dans la direction axiale et dans la direction de rotation.

2. Mandrin porte-taraud selon la revendication 1, **caractérisé en ce que** l'au moins une deuxième bille (44) est précontrainte par rapport à l'élément élastomère (48) dans la direction radiale.

3. Mandrin porte-taraud selon la revendication 1 ou 2, **caractérisé en ce que** le jeu de l'au moins une première bille (38) est dimensionné de telle sorte que, lors du taraudage et lors de l'inversion, tout d'abord il en résulte une transmission de couple amortie par le biais de l'élément élastomère (48 ; 60, 62), avant qu'un entraînement par le biais de la première bille (38) n'ait lieu.

4. Mandrin porte-taraud selon l'une des revendications précédentes, **caractérisé en ce que** les au moins une première (38) et deuxième (44) billes sont disposées dans un plan radial commun.

5. Mandrin porte-taraud selon l'une des revendications précédentes, **caractérisé en ce que** l'au moins une première bille (38) est reçue dans un alésage radial (36) de la partie de réception (12), et **en ce que** l'élément élastomère (48) est réalisé de préférence de manière annulaire et est retenu dans un évidement (50) sur la partie intermédiaire (18).

6. Mandrin porte-taraud selon l'une des revendications précédentes, **caractérisé en ce que** le jeu entre la partie de réception (12) et la partie intermédiaire (18) est dimensionné de telle sorte qu'il en résulte un jeu de ± 0,1° à 3°, de préférence de ± 0,5° à 2°, dans la direction de rotation.

7. Mandrin porte-taraud selon l'une des revendications précédentes, **caractérisé en ce qu'**au moins deux premières billes (38) pour la transmission de couple et au moins deux deuxièmes billes (44) accouplées au moyen de serrage (14) par le biais d'éléments élastomères (48) sont prévues, et **en ce que** les premières billes (38) et les deuxièmes billes (44) sont disposées de préférence de manière opposée les unes aux autres.

8. Mandrin porte-taraud selon l'une des revendications précédentes, **caractérisé en ce que** la partie intermédiaire (18) est reçue dans un alésage central (15) de la partie de réception (12) et est précontrainte dans la direction axiale contre la partie de réception (12) au moyen d'un élément élastomère (29).

9. Mandrin porte-taraud selon l'une des revendications précédentes, **caractérisé en ce que** la partie de réception (12) est réalisée comme élément interchangeable qui est réalisé pour être reçu de manière amovible sur un système de serrage, la partie de réception (12) étant de préférence réalisée sous la forme d'une pince de serrage qui est prévue pour être reçue de manière amovible sur un mandrin à pince de serrage.

10. Mandrin porte-taraud selon la revendication 9, **caractérisé en ce qu'**un élément de fixation (40), de préférence sous la forme d'un anneau, est prévu sur la partie de réception (12) pour la fixation des au moins une première (38) et deuxième (44) billes de manière à les empêcher de tomber.

11. Mandrin porte-taraud selon la revendication 9 ou 10, **caractérisé en ce que** l'au moins une deuxième bille (44) est retenue dans la partie de réception (12) de telle sorte que l'au moins une deuxième bille (44) dépasse vers l'extérieur au-delà du contour extérieur de la partie de réception (12), de telle sorte que lors du serrage sur un mandrin associé, en particulier sur un mandrin à pince de serrage, il en résulte une précontrainte sur l'élément élastomère (48) associé.

12. Mandrin porte-taraud selon l'une des revendications 9 à 11, **caractérisé en ce que** la partie intermédiaire (18) est vissée sur la partie de réception (12) de préférence au moyen d'un écrou d'accouplement (52), l'au moins une deuxième bille (44) étant de préférence précontrainte contre l'élément élastomère (48) au moyen de l'écrou d'accouplement (52).

13. Mandrin porte-taraud selon l'une des revendications 1 à 12, **caractérisé en ce que** l'au moins une première bille (38) et l'au moins une deuxième bille (44) sont retenues respectivement de manière radialement mobile dans la partie de réception (12) et sont précontraintes élastiquement par rapport à la partie intermédiaire (18) par le biais d'au moins un élément élastomère (60, 62) disposé dans la région extérieure de la partie de réception (12), l'au moins une première (38) et l'au moins une deuxième bille (44) étant accouplées à la partie intermédiaire (18) de préférence respectivement par le biais d'un élément élastomère (60, 62) de telle sorte qu'il en résulte une flexibilité amortie par le biais des éléments élastomères (60, 62) dans la direction axiale et dans la direction de rotation.

14. Mandrin porte-taraud selon la revendication 13, **caractérisé en ce que** les au moins une première (38) et deuxième billes (44) sont retenues de manière mobile respectivement dans un alésage radial (46, 36) de la partie de réception (12) et sont retenues avec jeu dans des évidements (68, 42), de préférence en forme de calottes sphériques, de la partie intermédiaire.

15. Mandrin porte-taraud selon la revendication 13 ou 14, **caractérisé en ce qu'**au moins un anneau élastomère (60, 62) s'étendant dans une rainure périphérique (61, 63) de la partie de réception (12) est prévu, lequel anneau s'appuie contre les premières (38) et deuxièmes (44) billes et lequel dépasse vers l'extérieur au-delà du contour extérieur de la partie de réception (12), de telle sorte que lors du serrage sur un mandrin associé, en particulier sur un mandrin à pince de serrage, il en résulte une précontrainte sur l'anneau élastomère (60, 62), les premières (38) et deuxièmes (44) billes étant retenues élastiquement de préférence entre deux anneaux élastomères (60, 62) qui s'appuient des deux côtés sur les au moins une première (38) et deuxième (44) billes.
